# EUROPÄISCHE PATENTSCHRIFT

(11) **EP 2 880 000 B1**
(45) Veröffentlichungstag und Bekanntmachung des Hinweises auf die Patenterteilung: **08.06.2016**
(21) Anmeldenummer: 13741675.6
(22) Anmeldetag: 24.07.2013
(51) Int. Cl.: C04B 7/345, C01B 33/24

(54) **VERFAHREN ZUR HERSTELLUNG VON DICALCIUMSILIKAT**
METHOD FOR PRODUCING DICALCIUM SILICATE
PROCÉDÉ POUR PRODUIRE DU SILICATE DICALCIQUE

(30) Priorität: 01.08.2012 DE 102012107022
(43) Veröffentlichungstag der Anmeldung: 10.06.2015
(73) Patentinhaber: Karlsruher Institut Für Technologie (KIT), 76131 Karlsruhe (DE)
(72) Erfinder: HUNSINGER, Hans, 76356 Weingarten (DE); BEUCHLE, Günter, 76185 Karlsruhe (DE); STEMMERMANN, Peter, 76149 Karlsruhe (DE); SCHWEIKE, Uwe, 76185 Karlsruhe (DE); WARZYCHA, Karolina, 76131 Karlsruhe (DE); GARBEV, Krassimir, 76344 Eggenstein-Leopoldshafen (DE)
(86) Internationale Anmeldenummer: PCT/EP2013/002186
(87) Internationale Veröffentlichungsnummer: WO 2014/019656

(56) Entgegenhaltungen:
- DE-A1- 3 414 196
- KACIMI L ET AL: "Synthesis of belite cement clinker of high hydraulic reactivity", CEMENT AND CONCRETE RESEARCH, PERGAMON PRESS, ELMSFORD, NY, US, Bd. 39, Nr. 7, 1. Juli 2009 (2009-07-01), Seiten 559-565, XP026150774, ISSN: 0008-8846, DOI: 10.1016/J.CEMCONRES.2009.02.004 [gefunden am 2009-05-14]
- Frank Zeman ET AL: "The Reduced Emission Oxygen Kiln. A White Paper Report for the Cement Sustainability Initiative of the World Business Council on Sustainable Development", , 31. Juli 2008 (2008-07-31), Seiten 1-72, XP055087909, Gefunden im Internet: URL:http://www.wbcsdcement.org/pdf/technol ogy/Frank Zeman Colombia Paper Lenfest.pdf [gefunden am 2013-11-12]
- ZEMAN ET AL: "Oxygen combustion in cement production", ENERGY PROCEDIA, ELSEVIER, NL, Bd. 1, Nr. 1, 1. Februar 2009 (2009-02-01) , Seiten 187-194, XP026471874, ISSN: 1876-6102, DOI: 10.1016/J.EGYPRO.2009.01.027 [gefunden am 2009-02-01]
- CHEMICAL ABSTRACTS, Bd. 112, Nr. 8, 19. Februar 1990 (1990-02-19), Columbus, Ohio, US; abstract no.: 61702h, M.Georgescu: Seite 360, XP155369 & M. GEORGESCU: "Active Belite clinkers and cements with high silica modulus", MATER. CONSTR., Bd. 19, Nr. 2, 1989, Seiten 76-78, Bucharest, Romania
- CHEMICAL ABSTRACTS, Bd. 97 1984, Columbus, Ohio, US; abstract no.: 149596j, W.Kurdowski et al.: "Transitory phases in the synthesis of dicalcium silicate in the presence of calcium chloride", XP1326256 & W.KURDOWSKI: "Transitory phases in the synthesis of dicalcium silicate in the presence of calcium chloride", CERAM., Bd. 30, 1980, Seiten 47-61, krakow, Poland

## Beschreibung

Die Erfindung betrifft ein Verfahren zur Herstellung von Dicalciumsilikat, bevorzugt als α'_{L}- , β-C₂S und amorphes Dicalciumsilikat, um als hydraulisches Bindemittel oder als Ausgangsstoff zur Herstellung eines hydraulischen Bindemittels eingesetzt zu werden. Dicalciumsilikat in der Form γ-C₂S ist ungeeignet.

In diesem Dokument wird die übliche *Zement-Notation* verwendet, bei der C für CaO, S für SiO₂, A für Al₂O₃ und H für H₂O stehen. In dieser Notation wird z. B. das β-Dicalcium-Silikat *Belit* durch β-C₂S dargestellt, da dessen molares Verhältnis Calcium: Silizium (Ca:Si) einen Wert von 2:1 aufweist, was in herkömmlicher Notation der Angabe 2 [CaO] · [SiO₂]= Ca₂SiO₄ entspricht.

Belit-Zemente, die Dicalciumsilikat enthalten, sind aus der Zementtechnik bekannt und werden durch das herkömmliche Verfahren zur Zementklinkerproduktion hergestellt, wobei deren Herstellung jedoch ähnlich energieintensiv wie die Herstellung von Portlandzement ist. Die Rohstoffe Kalk und Siliziumdioxid werden hierzu gemahlen und in einem molaren'Verhältnis Ca:Si von etwa 2 vermischt. Anschließend wird das Produkt zunächst bei ca. 800 °C entsäuert und anschließend bei ca. 1250 °C im Drehrohrofen gebrannt. Nach dem Abkühlen wird der entstandene Belit-Klinker gemeinsam mit Zumahlstoffen vermahlen.

Gemäß der DE 10 2005 037 771 B4 werden die entsäuerten Ausgangsstoffe gemahlen und so abgemischt, dass eine Mischung mit einem molaren Verhältnis C:S zwischen 1,5:1 und 2,5:1 vorliegt; ein eventuelles CaO-Defizit muss durch die Zugabe von Branntkalk oder Kalkmilch ausgeglichen werden. Durch Impfen des Ausgangsmaterials mit Kristallisationskeimen aus α'_{L}-Ca₂ [HSiO₄] (OH) und anschließender hydrothermaler Behandlung bei ca. 200 °C entsteht ein Zwischenprodukt, das α-Ca₂SiO₄(OH)₂ enthält. Nach Filtration und Trocknung wird dieses Zwischenprodukt bei Brenntemperaturen von 600 °C bis 900 °C in ein Belit enthaltendes Bindemittel umgewandelt und anschließend gemahlen. Nachteilig hieran ist das Erfordernis von zwei thermischen Behandlungsstufen, d.h. eine hydrothermale Stufe und das. Brennen. Das mit diesem Verfahren hergestellte Produkt ist ähnlich reaktionsträge wie das im Drehrohrofen hergestellte Material.

Gemäß der DE 10 2009 018 632 B4 wird zunächst ein Ausgangsmaterial, das Calcium- (Ca-), Silizium- (Si-) und Sauerstoff-Atome enthält, wobei 0-50 % der Silizium-Atome durch Aluminium-(Al-) Atome ersetzt sind, die in einem molaren Verhältnis C:(S + A), bei dessen Ermittlung die modalen Anteile an Kalk, Calciumsulfit und Calciumsulfat unberücksichtigt bleiben, von 1,5:1 bis 2,5:1 zueinander stehen, bereitgestellt und mit Wasser versetzt. Das so mit Wasser versetzte Ausgangsmaterial wird dann bei einer Temperatur von 120-250 °C hydrothermal behandelt, wodurch sich das Ausgangsmaterial überwiegend in ein Zwischenprodukt umwandelt. Durch anschließendes Reaktionsmahlen des Zwischenprodukts bei einer Temperatur von 100-150 °C pur oder gemeinsam mit anderen silikathaltigen Materialien in einer Mühle entsteht unter Reaktion und Entwässerung zumindest teilweise das belithaltige Bindemittel. Nachteilig hieran ist, dass sich in diesem Verfahren Calciumcarbonat nicht direkt einsetzen lässt.

Gemäß L.Kacimi et al.: Synthesisi of belite cement clinker of high hydraulic reactivity", CEMENT AND CONCRETE RESEARCH, Bd 39, Nr 7, 1.Juli 2009, Seiten 559-565, DOI:10.1016/J.CEMCONRES.2009.02.004, werden Belitzemente (Dikalciumsilikat) aus Ausgangsstoffen, die Calziumcarbonat und Siliziumoxid mit einem molaren Verhältnis C:S von 2 enthalten, unter Zugabe von alkalihaltigen Mineralisatoren (bei 1150°C, unter Zugabe von 2% NaF) hergestellt.

Ausgehend hiervon ist es die Aufgabe der vorliegenden Erfindung, ein Verfahren zur Herstellung von Dicalciumsilikat vorzuschlagen, das die genannten Nachteile und Einschränkungen nicht aufweist. Insbesondere soll ein derartiges Verfahren angegeben werden, das eine möglichst energieeffiziente Herstellung von Dicalciumsilikat aus in der Bauindustrie üblichen Ausgangsstoffen erlaubt.

Diese Aufgabe. wird durch die Verfahrensschritte des Patentanspruchs 1 gelöst. Die Unteransprüche beschreiben jeweils vorteilhafte Ausgestaltungen der Erfindung.

Erfindungsgemäß erfolgt die energieeffiziente Produktion des Dicalciumsilikats aus Ausgangsstoffen, die Calciumcarbonat CaCO₃ und Siliziumdioxid SiO₂ enthalten, besonders bevorzugt bei einem molaren Verhältnis C:S von 2:1 gemäß der Summenformel (1)

2 CaCO₃ + SiO₂ → Ca₂SiO₄ + 2CO₂ ↑ (1)

Die Reaktionsenthalpie dieser Reaktion ist mit ΔH = 115kJ/mol Ca um rund 35 % niedriger als die reine thermische Zersetzung von Calciumcarbonat CaCO₃ ohne Zugabe von SiO₂ gemäß der Summenformel (2)

CaCO₃ → CaO + CO₂ ↑ (2)

die eine Reaktionsenthalpie von ΔH = 178kJ/mol Ca aufweist.

Um Ausgangsstoffe, die CaCO₃ und SiO₂ in einem molaren Verhältnis C:S von 1,5:1 bis 2,5:1, bevorzugt von 1,9:1 bis 2,1: 1, besonders bevorzugt 2:1, enthalten, möglichst vollständig zu Dicalciumsilikat umzusetzen, ist die Zugabe eines Mineralisierungshilfsstoffes *(mineralizing agent)* in Form eines anorganischen Alkali- oder Erdalkalisalzes, vorzugsweise eines Carbonats, eines Hydrogencarbonats, eines Fluorides, der eines Chlorides oder eines Gemisches hieraus erforderlich, insbesondere von
- Natriumcarbonat Na₂CO₃,
- Natriumfluorid NaF,
- Kaliumfluorid KF,
- Calciumfluorid CaF₂,
- Magnesiumchlorid MgCl₂
- oder eines Gemisches hieraus,
und zwar in einem Anteil von 0,5 Gew.% bis einschl. 20 Gew.%, bevorzugt von 2 Gew.% bis einschl. 10 Gew.%, jeweils bezogen auf die Summe der Ausgangsstoffe.

In einer bevorzugten Ausgestaltung, insbesondere für die selektive Herstellung von α'_{L}- , β-C₂S und amorphem Dicalciumsilikat, werden die Ausgangstoffe in einem molaren Verhältnis C:S von 1,9 bis 2,1 vorgelegt. Als Mineralisierungshilfsstoff werden
- 0,5 bis einschl. 10 Gew.% Na₂CO₃ oder
- ein Gemisch aus 0,5 bis einschl. 5 Gew.% Na₂CO₃ und 0,5 bis einschl. 5 Gew.% CaF₂, jeweils bezogen auf die Summe der Ausgangstoffe zugegeben.

In einer besonders bevorzugten Ausgestaltung, die die höchste Ausbeute an α'_{L}- und/oder β-C₂S bei gleichzeitig geringsten Kosten liefert, wird als Mineralisierungshilfsstoff ein Gemisch aus 0,5 bis einschl. 1,5 Gew.% Na₂CO₃ und 0,5 bis einschl. 1,5 Gew.% CaF₂ eingesetzt.

In einer alternativen Ausgestaltung, die die höchste beobachtete Ausbeute an α'_{L}-C₂S liefert, wird als Mineralisierungshilfsstoff eine Mischung aus 4 bis einschl. 6 Gew.% Na₂CO₃ ohne Zusatz von CaF₂ eingesetzt.

Das erfindungsgemäße Verfahren wird durchgeführt
- in einer Gasatmosphäre mit einem CO₂-Partialdruck P_{CO2} von 0,05 bis einschl. 0,2 MPa, vorzugsweise von 0,08 bis einschl. 0,12 MPa, und
- bei Temperaturen von 900 bis einschl. 1100 °C, vorzugsweise von 950 bis einschl. 1050°C
- vorzugsweise über eine Zeitdauer von 10 Minuten bis einschl. 5 Stunden, besonders bevorzugt innerhalb von 30 Minuten bis einschl. 1 Stunde.

Bei der Kalzinierungsreaktion von Calciumcarbonat (siehe Gleichung 1) wird reines CO₂ freigesetzt. Bei äußerer Reaktorbeheizung oder der integrierten Oxyfuel-Verbrennung von kohlenstoffhaltigen Brennstoffen entspricht der CO₂-Partialdruck p_{CO2} ungefähr dem Gesamtdruck p_{ges}. Bei integrierter Oxyfuel-Verbrennung von C und H haltigen Brennstoffen entspricht der CO₂-Partialdruck p_{CO2} ungefähr dem Gesamtdruck p_{ges} des trockenen Gases. Damit lässt sich dann das CO₂ sowohl aus dem Rohstoff als auch aus dem Brennstoff gegebenenfalls nach Trocknung direkt zusammen verwerten oder alternativ durch Untertagespeicherung (analog zu *Carbon Dioxide Capture and Storage,* CCS) entsorgen.

In einer besonders bevorzugten Ausgestaltung wird das Verfahren so durchgeführt, dass sich zumindest ein Teil der Mineralisierungshilfsstoffe, die Alkalien enthalten, insbesondere Na₂CO₃, wieder aus einem Verfahrensprodukt zurückgewinnen und erneut einsetzen lässt.

Vorzugsweise wird hierzu das im vorliegenden Verfahren gewonnene Dicalciumsilikat-haltige Produkt in Wasser, bevorzugt bei einer Temperatur bis 250°C, suspendiert, so dass darin enthaltene alkalihaltigen Verbindungen zersetzt und vorwiegend als Alkalihydroxide gelöst werden, um dann mit zugeführtem Kohlendioxid CO₂ zu Carbonaten und/oder zu Hydrogencarbonaten, z.B. zu Na₂CO₃ und/oder NaHCO₃, zu reagieren. Nach erfolgter Abtrennung der Carbonate und/oder Hydrogencarbonate erfolgt deren Rückführung in das Verfahren als Mineralisierungshilfsstoff.

Das mit dem erfindungsgemäßen Verfahren hergestellte Produkt zeigt dann eine besonders hohe Qualität, solange es einen Gehalt an nichtreagiertem Ausgangsstoff unterhalb von 5 Gew.% und einen Gesamtkohlenstoffgehalt unterhalb von 1,5 Gew. %, jeweils bezogen auf die Summe der Verfahrensprodukte, aufweist. Der Gesamtkohlenstoffgehalt ist definiert als der Gewichtsanteil an Kohlenstoff im gesamten Verfahrensprodukt, einschließlich der in amorpher Form vorliegenden Produkt-Anteilen. Der Gehalt an γ-C₂S soll unter 5 Gew. % liegen.

Das erfindungsgemäße Verfahren weist insbesondere die folgenden Vorteile auf.

Das erfindungsgemäße Verfahren erlaubt die energieeffiziente Herstellung von Dicalciumsilikat insbesondere mit einem molaren Verhältnis Ca:Si mit einem Wert möglichst nahe bei 2:1 aus in der Bauindustrie üblichen Ausgangsstoffen, die Calciumcarbonat CaCO₃ und Siliziumdioxid SiO₂ enthalten. Je nach Wahl der Verfahrensparameter CO₂-Partialdruck und Temperatur sowie des Mineralisierungshilfsstoffes lässt sich im Verfahrensprodukt die Ausbeute an α'_{L}- und β-C₂S einstellen.

Das mit diesem Verfahren gewonnene Dicalciumsilikat eignet sich insbesondere als Ausgangsmaterial für das Verfahren gemäß der DE 10 2009 018 632 B4.

Die Erfindung wird im Folgenden anhand von Ausführungsbeispielen und Figuren erläutert. Hierbei zeigen die Figuren im Einzelnen:
- **Fig. 1**: Umsetzung der Ausgangsstoffe ohne Mineralisierungshilfsstoff **(Vergleichsbeispiel);**
- **Fig. 2**: Umsetzung der Ausgangsstoffe unter Variation des CO₂-Partialdrucks bei Einsatz von 5 Gew.% Na₂CO₃ als Mineralisierungshilfsstoff;
- **Fig. 3**: Umsetzung der Ausgangsstoffe unter Variation des molaren Verhältnisses C:S bei Einsatz von 5 Gew.% Na₂CO₃ als Mineralisierungshilfsstoff;
- **Fig. 4**: Umsetzung der Ausgangsstoffe unter Variation des Gehalts an Na₂CO₃ als Mineralisierungshilfsstoff;
- **Fig. 5**: Umsetzung der Ausgangsstoffe unter Variation der Temperatur bei Einsatz von 5 Gew.% Na₂CO₃ als Mineralisierungshilfsstoff;
- **Fig. 6**: Gesamtkohlenstoffgehalt bei Variation der Temperatur bei Einsatz von 5 Gew.% Na₂CO₃ als Mineralisierungshilfsstoff;
- **Fig. 7**: Umsetzung der Ausgangsstoffe unter Variation der Temperatur bei Einsatz von 2 Gew.% KF als Mineralisierungshilfsstoff;
- **Fig. 8**: Umsetzung der Ausgangsstoffe unter Variation des Gehalts an KF als Mineralisierungshilfsstoff;
- **Fig. 9**: Umsetzung der Ausgangsstoffe unter Variation der Temperatur bei Einsatz von 2 Gew.% NaF als Mineralisierungshilfsstoff;
- **Fig. 10**: Umsetzung der Ausgangsstoffe unter Variation des Gehalts an Ca₂F als Mineralisierungshilfsstoff;
- **Fig. 11**: Umsetzung der Ausgangsstoffe unter Variation des CO₂-Partialdrucks bei Einsatz eines Gemischs aus 1 Gew.%; Na₂CO₃ und 1 Gew.% CaF₂ als Mineralisierungshilfsstoff
- **Fig. 12**: Umsetzung der Ausgangsstoffe mit reinem Na₂CO₃ bzw. mit Na₂CO₃, das aus Verfahrensprodukten zurückgewonnen wurde, als Mineralisierungshilfsstoff.

Als Ausgangsstoffe wurden in allen Versuchen die natürlichen Rohstoffe
- Kalkstein als Quelle für Calciumcarbonat CaCO₃ und
- Quarzmehl als primäre Quelle für Siliziumdioxid SiO₂
eingesetzt, die darüber hinaus weitere Inhaltsstoffe, z.B. Mg, aufwiesen.

Für das eingesetzte Quarzmehl wurde mittels Röntgenfluoreszenzanalyse die folgende Zusammensetzung ermittelt:

| Oxid | Gew.% |
|---|---|
| Al₂O₃ | 0,052 |
| CaO | 0,017 |
| K₂O | 0,112 |
| Na₂O | 0,008 |
| SiO₂ | 97,74 |

Für den eingesetzten Kalkstein wurde mittels Röntgenfluoreszenzanalyse die folgende Zusammensetzung ermittelt:

| Oxid | Gew.% |
|---|---|
| CO₂ | 42,8 |
| Na₂O | 0,02 |
| MgO | 0,48 |
| Al₂O₃ | 0,70 |
| SiO₂ | 1,84 |
| P₂O₅ | 0,37 |
| SO₂ | 0,07 |
| K₂O | 0,18 |
| CaO | 53,1 |
| TiO₂ | 0,04 |
| Fe₂O₃ | 0,34 |
| SrO | 0,03 |

### Vergleichsbeispiel: Ohne Mineralisierungshilfsstoff

Zum **Vergleich** wurden die Ausgangsstoffe mit einem molaren Verhältnis C:S = 2 bei einem C02-Partialdruck (p_{CO2}) von 0,1 MPa über 2 Stunden bei Temperaturen von 850 - 1100 °C **ohne Zugabe eines Mineralisierungshilfsstoffes** umgesetzt.

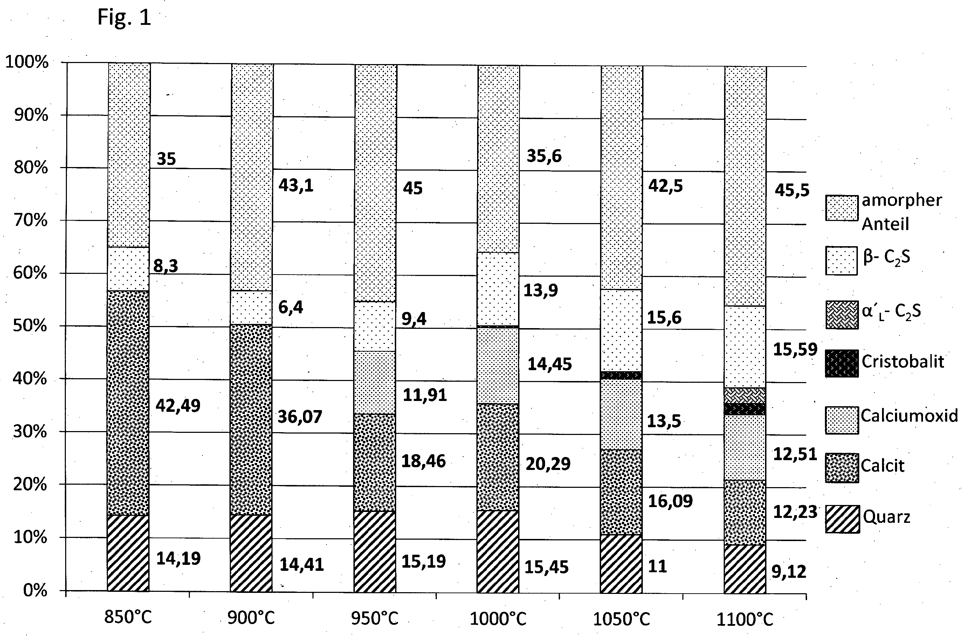

Wie in **Fig. 1** dargestellt, ließ sich in diesem Vergleichsbeispiel nur bei 1100 °C überhaupt eine Ausbeute an α'_{L}-C₂S in Höhe von 2,95 Gew.% nachweisen, während die Ausbeute an β-C₂S über den genannten Temperaturbereich mit steigender Temperatur von 6,40 Gew.% auf 15,59 Gew.% anstieg. Es fanden sich erhebliche Mengen an nichtumgesetztem Quarz, CaO und CaCO₃ im Verfahrensprodukt. Der Gesamtkohlenstoffgehalt lag oberhalb von 1,5 Gew.%.

### Ausführungsbeispiel 1: Variation des CO₂-Partialdrucks bei Einsatz von 5 Gew.% Na₂CO₃ als Mineralisierungshilfsstoff

In einem ersten Ausführungsbeispiel wurden die Ausgangsstoffe mit C:S = 2 bei einem CO₂-Partialdruck von 0,0065 - 0,25 MPa über 2 Stunden bei einer Temperatur von 1000 C° unter Zugabe des Mineralisierungshilfsstoffes 5 Gew.% Na₂CO₃, bezogen auf die Summe der Ausgangsstoffe, umgesetzt.

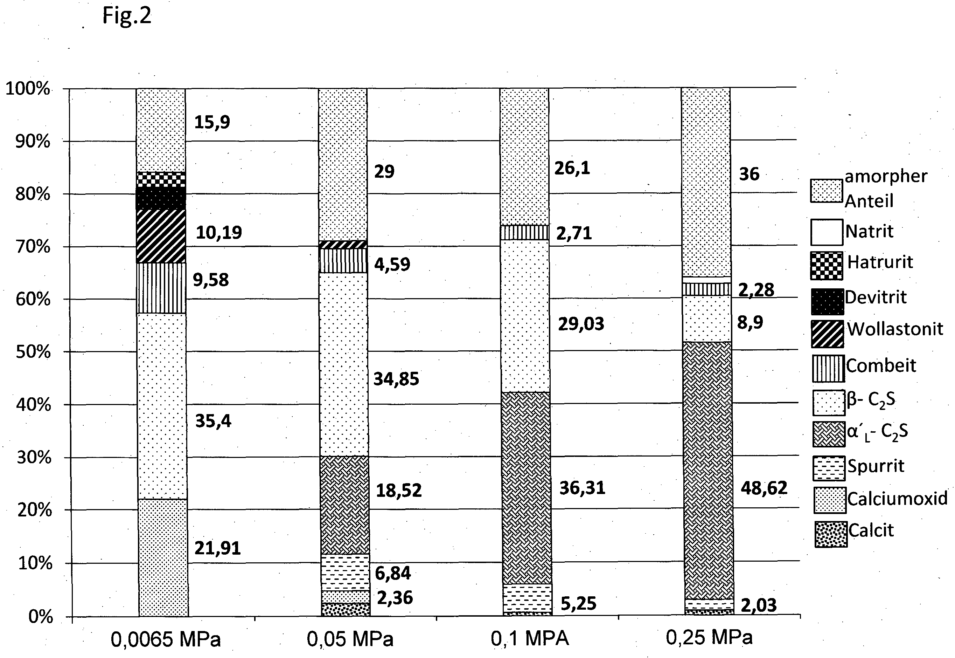

Wie in **Fig. 2** dargestellt, ergab sich bereits bei einem niedrigen p_{CO2} = 0,0065 MPa eine Ausbeute an β-C₂S in Höhe von 35,40 Gew.%, die sich mit zunehmendem Druck auf 29,03 Gew.% bei p_{CO2} = 0,1 MPa und auf 8,90 Gew.% bei p_{CO2} = 0,25 MPa verringerte.

Wie weiterhin in **Fig. 2** dargestellt, ließ sich bei einem niedrigen p_{CO2} von nur 0,0065 MPa keine Ausbeute an α'_{L} -C₂S nachweisen. Erst ab p_{CO2} = 0,05 MPa wurden 18,52 Gew.% α'_{L}-C₂S beobachtet; der Wert stieg bei p_{CO2} = 0,1 MPa auf 36,31 Gew. % und bei p_{CO2} = 0,25 MPa sogar auf 48,62 Gew.% an.

Wie schließlich in **Fig. 2** dargestellt, ergab sich unter Zugabe des Mineralisierungshilfsstoffes 5 Gew.% Na₂CO₃ bei 1000 °C und p_{CO2}= 0,1 MPa die höchste Gesamtausbeute an α'_{L}- und β-C₂S mit einem Wert von 65,34 Gew.%.

### Ausführungsbeispiel 2: Variation des molaren Verhältnisses C:S bei Einsatz von 5 Gew.% Na₂CO₃ als Mineralisierungshilfsstoff

In einem zweiten Ausführungsbeispiel wurden die Ausgangsstoffe mit den molaren Verhältnissen C:S = 1, C:S = 2 und C:S = 3 jeweils bei p_{CO2} = 0,1 MPa über 2 Stunden bei einer Temperatur von 1000 °C unter Zugabe des Mineralisierungshilfsstoffes 5 Gew.% Na₂CO₃, bezogen auf die Summe der Ausgangsstoffe, umgesetzt.

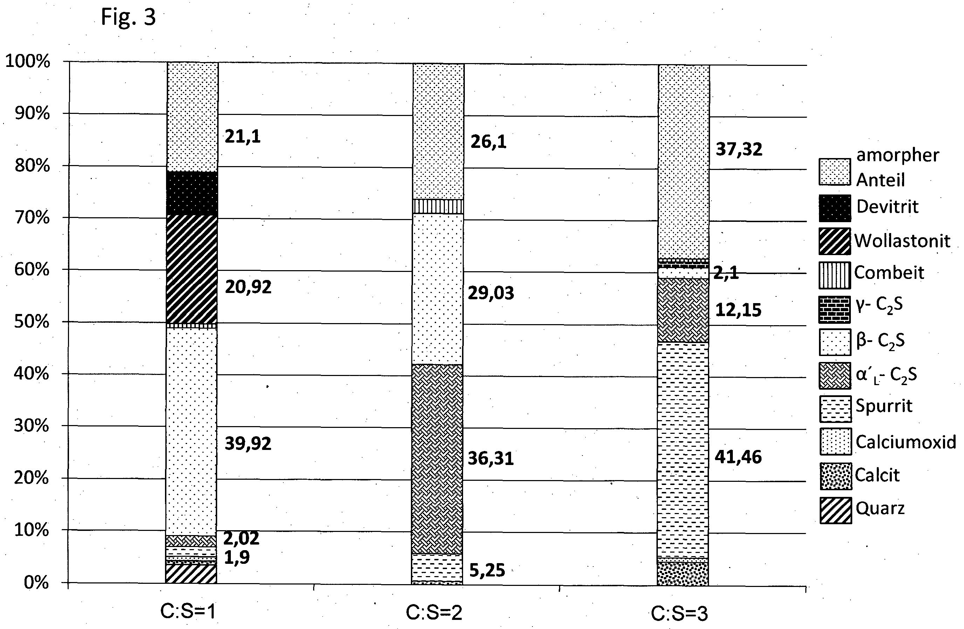

Wie in **Fig. 3** dargestellt, ergab sich bei C:S = 2 die höchste Ausbeute sowohl bei α'_{L}-C₂S als auch bei β-C₂S und damit auch in der Gesamtausbeute.

### Ausführungsbeispiel 3: Variation des Gehalts an Na₂CO₃ als Mineralisierungshilfsstoff

In einem dritten Ausführungsbeispiel wurden die Ausgangsstoffe mit C:S = 2 bei p_{CO2} = 0,1 MPa über 2 Stunden bei einer Temperatur von 1000 °C unter Zugabe des Mineralisierungshilfsstoffes Na₂CO₃ umgesetzt, wobei der Anteil an Na₂CO₃, bezogen auf die Summe der Ausgangsstoffe, von 1 Gew.% bis 10 Gew.% variiert wurde.

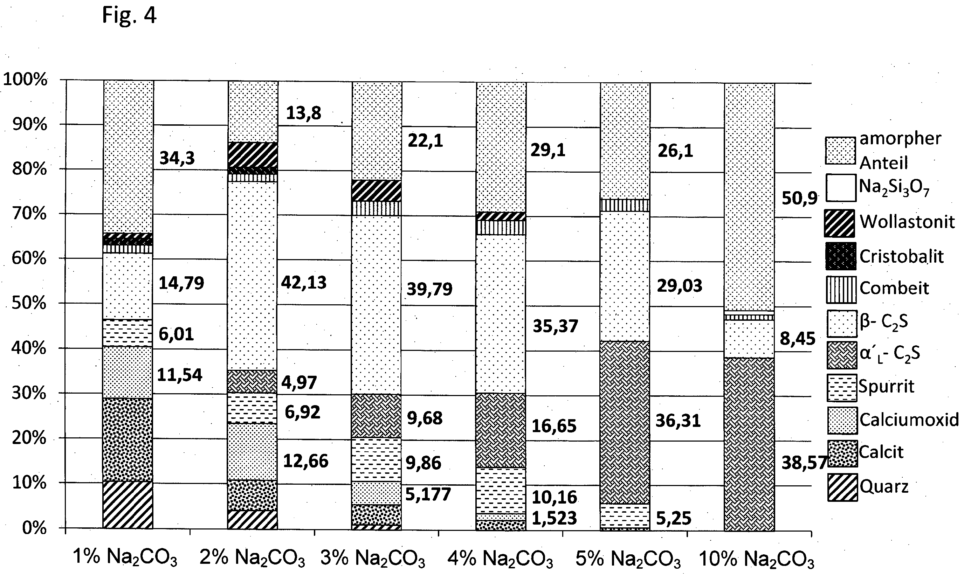

Wie in **Fig. 4** dargestellt, ergab sich bei einem Anteil des Mineralisierungshilfsstoffes Na₂CO₃ in Höhe von 5 Gew.% die höchste Ausbeute sowohl bei α'_{L}-C₂S als auch bei β-C₂S und damit auch in der Gesamtausbeute mit einem Wert von 65,34 Gew.%.

### Ausführungsbeispiel 4: Variation der Temperatur bei Einsatz von 5 Gew.% Na₂CO₃ as Mineralisierungshilfsstoff

In einem vierten Ausführungsbeispiel wurden die Ausgangsstoffe mit C:S = 2 bei p_{CO2} = 0,1 MPa über 2 Stunden jeweils bei Temperaturen von 850 - 11.00 °C unter Zugabe des Mineralisierungshilfsstoffes 5 Gew.% Na₂CO₃, bezogen auf die Summe der Ausgangsstoffe, umgesetzt.

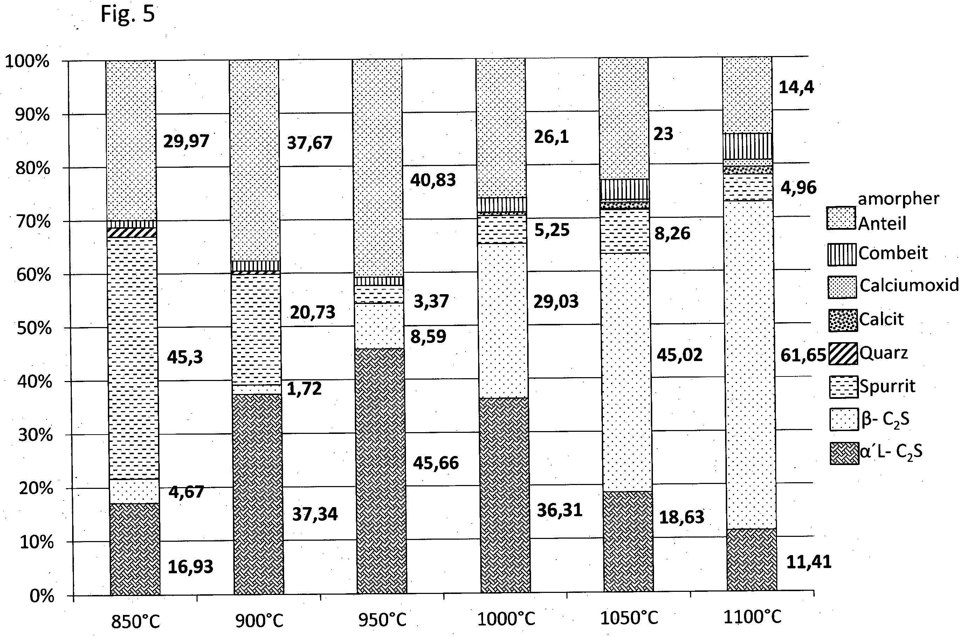

Wie in **Fig. 5** dargestellt, ergaben sich zwischen 950 °C und 1050 °C hohe Gesamtausbeuten als Summe der Ausbeuten von α'_{L}- und β-C₂S in Höhe von 54,25 - 65,34 Gew. %, wobei eine Gesamtausbeute von 65,34 Gew.% bei 1000 °C als Optimum bestimmt wurde. Bei dieser Temperatur ist außerdem die chemische und thermische Beanspruchung des Reaktormaterials und der Energiebedarf im Vergleich zu höheren Temperaturen vermindert.

Wie **Fig. 5** ebenfalls zeigt, steigt zwar bei 1100 °C die Gesamtausbeute an α'_{L}- und β-C₂S wieder an, was jedoch mit einer höheren chemischen und thermischen Beanspruchung des Reaktormaterials und einem höheren Energieaufwand verbunden ist.

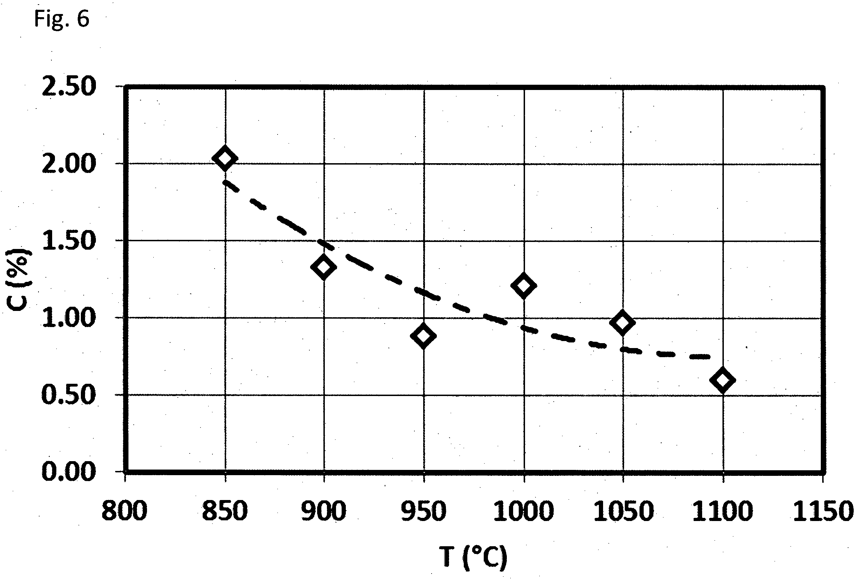

Wie aus **Fig. 6** hervorgeht, liegt der Gesamtkohlenstoffgehalt im Temperaturbereich von 900 - 1100 °C, bezogen auf die Summe der Reaktionssprodukte, im gewünschten Zielbereich unterhalb von 1,5 Gew. %während er bei 850 °C mit 2 Gew.% noch einen Wert oberhalb des bevorzugten Zielbereichs annimmt.

### Ausführungsbeispiel 5: Variation der Temperatur bei Einsatz von 2 Gew.% KF als Mineralisierungshilfsstoff

In einem fünften Ausführungsbeispiel wurden die Ausgangsstoffe mit C:S = 2 bei p_{CO2} = 0,1 MPa über 2 Stunden jeweils bei Temperaturen von 850 - 1100 °C unter Zugabe des Mineralisierungshilfsstoffes 2 Gew.% KF, bezogen auf die Summe der Ausgangsstoffe, umgesetzt.

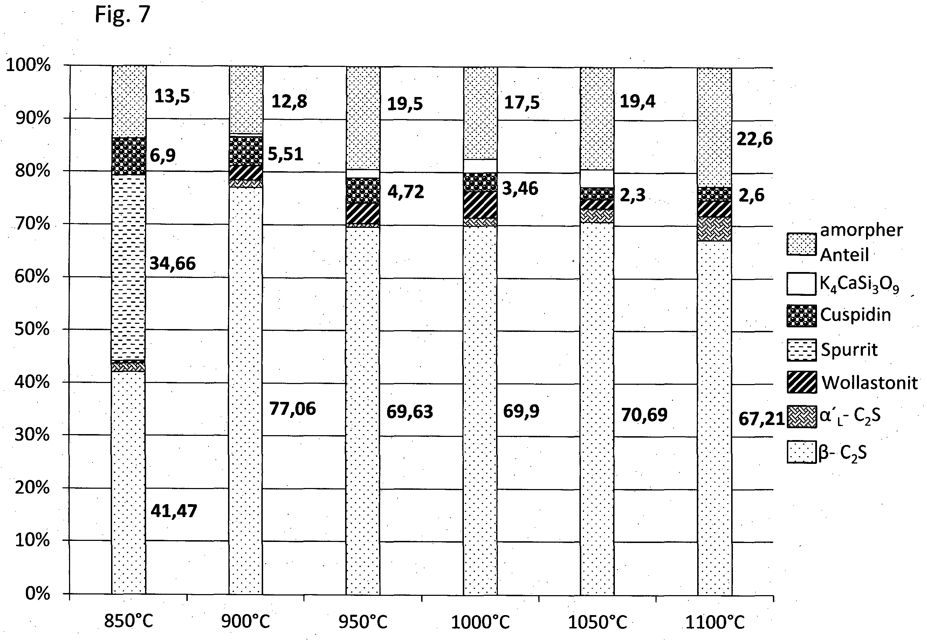

Wie in **Fig. 7** dargestellt, ergaben sich zwischen 900 °C und 1100 °C hohe Ausbeuten von β-C₂S in Höhe von bis zu 76,83 Gew.%, während die Ausbeute an α'_{L}-C₂S unter 5 Gew.% lag.

### Ausführungsbeispiel 6: Variation des Gehalts an KF als Mineralisierungshilfsstoff

In einem sechsten Ausführungsbeispiel wurden die Ausgangsstoffe C:S = 2 bei p_{CO2} = 0,1 MPa über 2 Stunden bei einer Temperatur von 900 °C unter Zugabe des Mineralisierungshilfsstoffes KF umgesetzt, wobei der Anteil an KF, bezogen auf die Summe der Ausgangsstoffe, von 0,5 Gew.% bis 5 Gew.% variiert wurde.

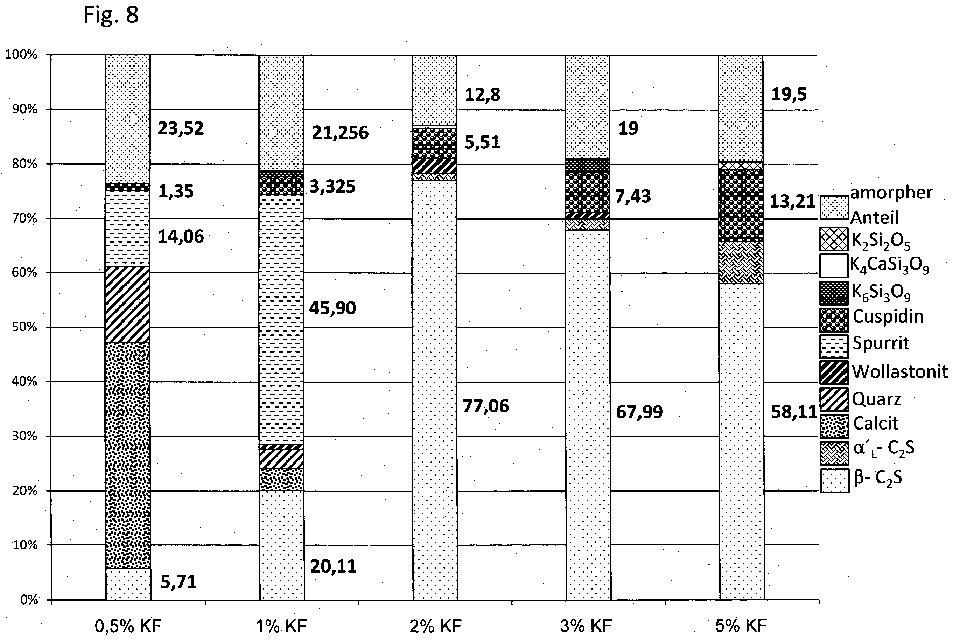

Wie in **Fig. 8** dargestellt, ergab sich bei einem Anteil des Mineralisierungshilfsstoffes KF in Höhe von 2 Gew.% die höchste Ausbeute bei β-C₂S mit einem Wert von 76.83 Gew.%.

### Ausführungsbeispiel 7: Variation der Temperatur bei Einsatz von 2 Gew.% NaF als Mineralisierungshilfsstoff

In einem siebten Ausführungsbeispiel wurden die Ausgangsstoffe mit C:S = 2 bei p_{CO2} = 0,1 MPa über 2 Stunden jeweils bei Temperaturen von 850 - 1100 °C unter Zugabe des Mineralisierungshilfsstoffes 2 Gew.% NaF, bezogen auf die Summe der Ausgangsstoffe, umgesetzt.

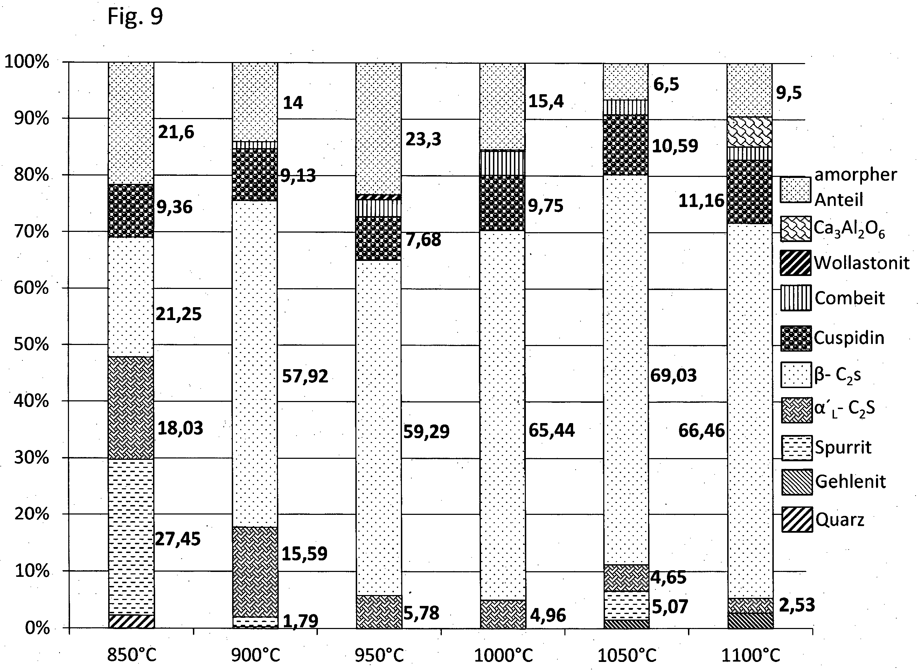

Wie in **Fig. 9** dargestellt, ergaben sich zwischen 900 °C und 1100 °C hohe Ausbeuten von β-C₂S in Höhe von bis zu 69,03 Gew.%, während die Ausbeute an α'_{L}-C₂S weit darunter lag.

### Ausführungsbeispiel 8: Variation des Gehalts an CaF₂ als Mineralisierungshilfsstoff

In einem achten Ausführungsbeispiel wurden die Ausgangsstoffe mit C:S = 2 bei p_{CO2} = 0,1 MPa über 2 Stunden bei einer Temperatur von 1000 °C unter Zugabe des Mineralisierungshilfsstoffes CaF₂ umgesetzt, wobei der Anteil an CaF₂, bezogen auf die Summe der Ausgangsstoffe, von 1 Gew.% bis 5 Gew.% variiert wurde.

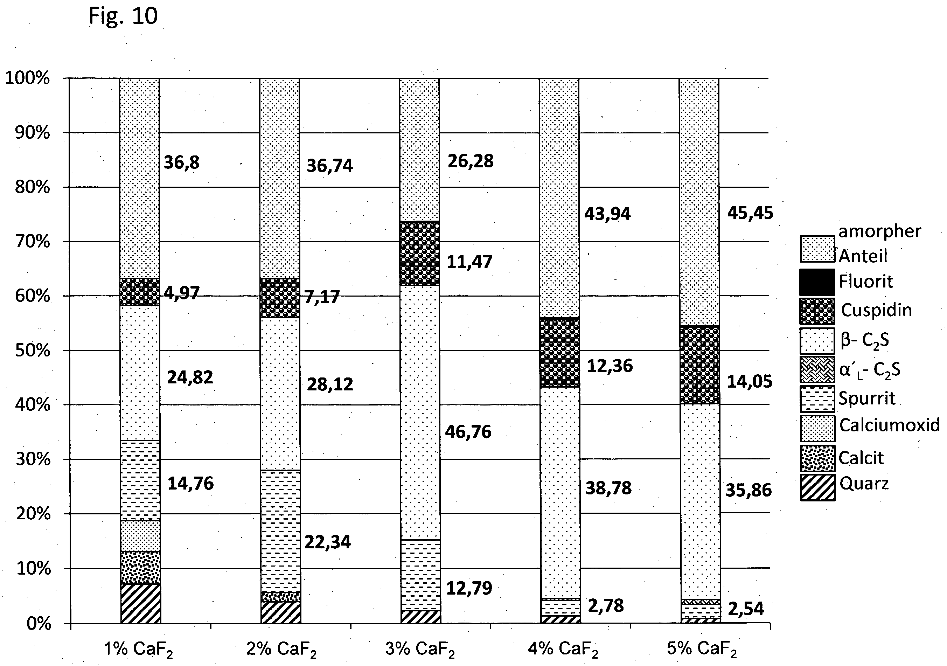

Wie in **Fig. 10** dargestellt, ergaben sich bei den eingesetzten Anteilen des Mineralisierungshilfsstoffes CaF₂ hohe Ausbeuten an β-C₂S, während die Ausbeuten an α'_{L}-C₂S verschwindend gering waren.

### Ausführungsbeispiel 9: Variation des CO₂-Partialdrucks bei Einsatz eines Gemischs aus 1 Gew.% Na₂CO₃ und 1 Gew.% CaF₂ als Mineralisierungshilfsstoff

In einem neunten Ausführungsbeispiel wurden die Ausgangsstoffe mit C:S = 2 bei CO₂-Partialdrücken von 0,003 MPa bzw. von 0,1 MPa über 2 Stunden bei einer Temperatur von 1000 C° unter Zugabe eines Gemischs aus 1 Gew.% Na₂CO₃ und 1 Gew.% CaF₂ als Mineralisierungshilfsstoff, bezogen auf die Summe der Ausgangsstoffe, umgesetzt.

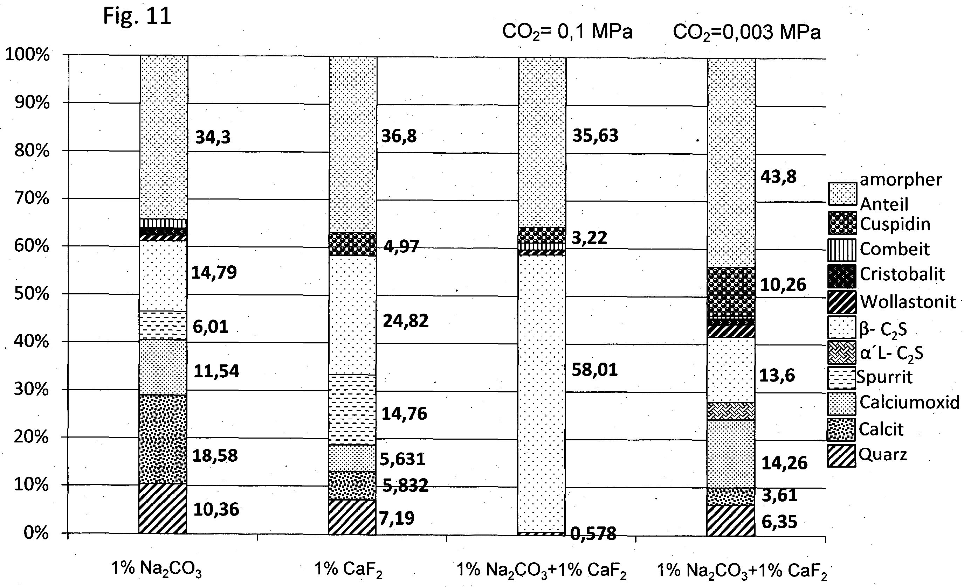

Wie in **Fig. 11** dargestellt, ergab sich bereits bei einem niedrigen p_{CO2} = 0,003 MPa eine Ausbeute an β-C₂S in Höhe von 13,06 Gew.%, die sich bei p_{CO2} = 0,1 MPa auf 58,01 Gew.% deutlich erhöhte. Im Vergleich zu den Untersuchungen bei p_{CO2} = 0,1 MPa, bei denen entweder nur 1 Gew.% Na₂CO₃ oder nur 1 Gew.% CaF₂ als Mineralisierungshilfsstoff eingesetzt wurden, führte der Einsatz des Gemischs aus 1 Gew.% Na₂CO₃ und 1 Gew.% CaF₂ als Mineralisierungshilfsstoff zur höchsten beobachteten Ausbeute an β-C₂S.

### Ausführungsbeispiel 10: Einsatz von 5 Gew.% Na₂CO₃ als Mineralisierungshilfsstoff in reiner Form bzw. in aus den Verfahrensprodukten zurückgewonnener Form

In einem zehnten Ausführungsbeispiel wurden die Ausgangsstoffe mit C:S = 2 bei p_{CO2} = 0,1 MPa über 2 Stunden bei einer Temperatur von 1000 °C unter Zugabe des Mineralisierungshilfsstoffes 5 Gew.% Na₂CO₃, bezogen auf die Summe der Ausgangsstoffe, umgesetzt.

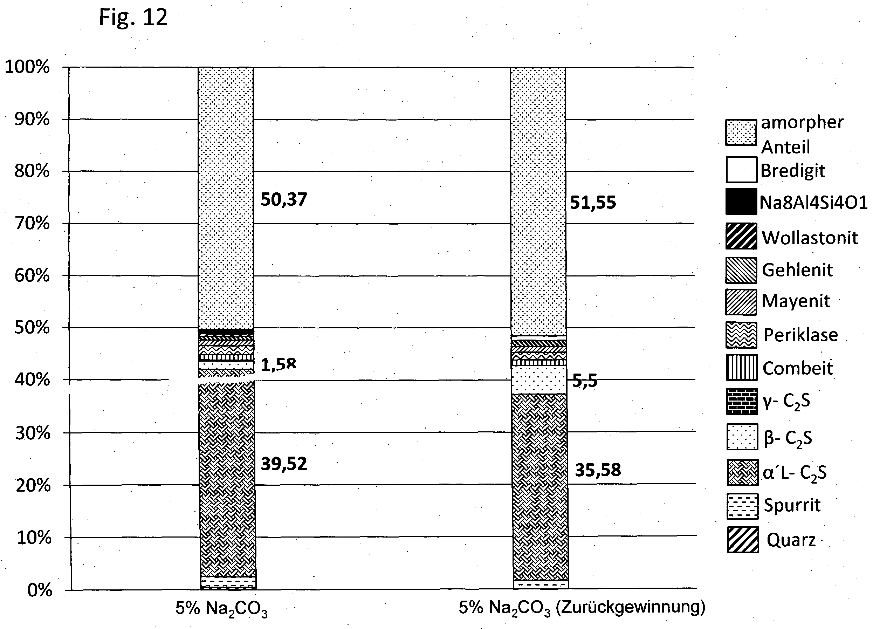

Wie in **Fig. 12** dargestellt, ergaben sich folgende Unterschiede, je nachdem ob reines Na₂CO₃ oder Na₂CO₃, das aus den Verfahrensprodukten zurückgewonnen war, eingesetzt wurde. Im letzteren Fall ist ein geringer Anteil an Natriumhydrogencarbonat vorhanden, was bevorzugt zur Bildung von β-C₂S führt, während die Summe aus α'_{L}-C₂S und β-C₂S in etwa gleich bleibt.

## Patentansprüche

1. Verfahren zur Herstellung von Dicalciumsilikat aus Ausgangsstoffen, die Calciumcarbonat CaCO₃ und Siliziumdioxid SiO₂ enthalten, wobei die Ausgangsstoffe mit einem molaren Verhältnis Calcium:Silizium (C:S) von 1,5:1 bis 2,5:1 vorgelegt werden, **dadurch gekennzeichnet, dass** die Ausgangsstoffe in einer Gasatmosphäre mit einem CO₂-Partialdruck von 0,05 MPa bis 0,2 MPa bei Temperaturen von 900 °C bis 1100 °C unter Zugabe eines anorganischen Alkali- oder Erdalkalisalzes mit einem Anteil von 0,5 **Gew.%** bis 20 **Gew.%,** bezogen auf die Summe der Ausgangsstoffe, als Mineralisierungshilfsstoff umgesetzt werden und dabei ein Gehalt an nichtreagiertem Ausgangsstoff im Dicalciumsilikat unterhalb von 5 Gew.% und einen Gesamtkohlenstoffgehalt unterhalb von 1,5 Gew.% erreicht wird.

2. Verfahren nach Anspruch 1, **dadurch gekennzeichnet, dass** die Ausgangsstoffe mit einem molaren Verhältnis C:S von 1,9:1 bis 2,1:1 vorgelegt werden.

3. Verfahren nach Anspruch 1 oder 2, **dadurch gekennzeichnet, dass** die Ausgangsstoffe in einer Gasatmosphäre mit einem CO₂-Partialdruck von 0,08 MPa bis 0,12 MPa umgesetzt werden.

4. Verfahren nach einem der Ansprüche 1 bis 3, **dadurch gekennzeichnet, dass** die Ausgangsstoffe bei Temperaturen von 950 °C bis 1050 °C umgesetzt werden.

5. Verfahren nach einem der Ansprüche 1 bis 4, **dadurch gekennzeichnet, dass** der Mineralisierungshilfsstoff in einem Anteil von 1 Gew.% bis 10 Gew.%, bezogen auf die Summe der Ausgangsstoffe, zugegeben wird.

6. Verfahren nach einem der Ansprüche 1 bis 5, **dadurch gekennzeichnet, dass** ein Alkali- oder Erdalkalicarbonat, -hydrogencarbonat, -fluorid oder -chlorid oder ein Gemisch hieraus als Mineralisierungshilfsstoff zugegeben wird.

7. Verfahren nach Anspruch 6, **dadurch gekennzeichnet, dass** Natriumcarbonat Na₂CO₃, Natriumfluorid NaF, Kaliumfluorid KF, Calciumfluorid CaF₂, Magnesiumchlorid MgCl₂ oder ein Gemisch hieraus als Mineralisierungshilfsstoff zugegeben wird.

8. Verfahren nach Anspruch 7, **dadurch gekennzeichnet, dass** ein Gemisch aus 0,5 Gew.% bis 5 Gew.% Na₂CO₃ und 0,5 Gew.% bis 5 Gew.% CaF₂, insbesondere ein Gemisch aus 1 Gew.% bis 1,5 Gew.% Na₂CO₃ und 1 Gew.% bis 1,5 Gew.% CaF₂ als Mineralisierungshilfsstoff zugegeben wird.

9. Verfahren nach einem der Ansprüche 1 bis 8, **dadurch gekennzeichnet, dass** der Mineralisierungshilfsstoff aus einem Verfahrensprodukt zumindest teilweise zurückgewonnen wird.

10. Verfahren nach Anspruch 9, **dadurch gekennzeichnet, dass** das Verfahrensprodukt, das alkalihaltige Verbindungen enthält, in Wasser suspendiert wird, wodurch die darin enthaltenen alkalihaltigen Verbindungen derart zersetzt werden, dass sie Alkali-Hydroxide bilden, die unter Zugabe von CO₂ zu einem Carbonat und/oder einem Hydrogencarbonat umgesetzt und aus der Suspension abgetrennt werden und anschließend als Mineralisierungshilfsstoff einsetzbar sind.

## Claims

1. Method for producing dicalcium silicate from raw materials which contain calcium carbonate CaCO₃ and silicon dioxide SiO₂, wherein the raw materials are present with a molar ratio of calcium : silicon (C:S) of 1.5:1 to 2.5:1, **characterised in that** the raw materials are reacted in a gaseous atmosphere at a CO₂ partial pressure of 0.05 MPa to 0.2 MPa and at temperatures of 900°C to 1100 °C with the addition of an inorganic alkali or earth alkali salt having a proportion of 0.5% by weight to 20% by weight relative to the sum total of the raw materials, as an auxiliary mineralisation material, and in this situation the content of non-reacting raw material in the dicalcium silicate of less than 5% by weight and a total carbon content of less than 1.5% by weight is attained.

2. Method according to claim 1, **characterised in that** the raw materials are present in a molar ratio C:S of 1.9:1 to 2.1:1.

3. Method according to claim 1 or 2, **characterised in that** the raw materials are reacted in a gaseous atmosphere with a CO₂ partial pressure of 0.08 MPa to 0.12 MPa.

4. Method according to any one of claims 1 to 3, **characterised in that** the raw materials are reacted at temperatures of 950 °C to 1050 °C

5. Method according to any one of claims 1 to 4, **characterised in that** the auxiliary mineralisation material is added in a proportion of 1% by weight to 10% by weight, relative to the sum total of the raw materials.

6. Method according to any one of claims 1 to 5, **characterised in that** an alkali or earth alkali carbonate, hydrogen carbonate, fluoride, or chloride, or a mixture thereof, is added as auxiliary mineralisation material.

7. Method according to claim 6, **characterized in that** sodium carbonate Na₂CO₃, sodium fluoride NaF, potassium fluoride KF, calcium CaF₂, magnesium chloride MgCl₂, or a mixture thereof, is added as auxiliary mineralisation material.

8. Method according to claim 7, **characterised in that** a mixture of 0.5% by weight to 5% by weight Na₂CO₃ and 0.5% to 5% by weight CaF₂, in particular a mixture of 1% by weight to 1.5% by weight Na₂CO₃, and 1% by weight to 1.5% by weight CaF₂ is added as auxiliary mineralisation material.

9. Method according to any one of claims 1 to 8, **characterised in that** the auxiliary mineralisation material is at least partially recovered from a method product.

10. Method according to claim 9, **characterised in that** the method product, which contains compounds containing alkali, is suspended in water, as a result of which the alkali-containing compounds contained therein are decomposed in such a way that they form alkali hydroxides, which, under the addition of CO₂, react to form a carbonate and/or a hydrogen carbonate, and are separated out from the suspension and can then be used as auxiliary mineralisation material.

## Revendications

1. Procédé de préparation de silicate dicalcique à partir de produits de départ renfermant du carbonate de calcium CaCO₃ et du dioxyde de silicium SiO₂, ces produits de départ se présentant avec un rapport molaire calcium : silicium (C : S) de 1,5 : 1 à 2,5 : 1,
**caractérisé en ce que**
les produits de départ sont mis en réaction dans une atmosphère gazeuse ayant une pression partielle de CO₂ de 0,05 MPa à 0,2 MPa à des températures de 900°C à 1100°C, avec addition d'un sel minéral alcalin ou alcalino terreux en proportion de 0,5 % en poids à 20 % en poids par rapport à la somme des produits de départ, faisant office d'auxiliaire de minéralisation, et, une teneur des produits de départ n'ayant pas réagi en silicate dicalcique inférieure de 5% en poids et une teneur totale en carbone inférieure à 1,5 % en poids étant obtenues.

2. Procédé conforme à la revendication 1,
**caractérisé en ce que**
les produits de départ se présentent avec un rapport molaire C:S de 1,9:1 à 2,1:1.

3. Procédé conforme à la revendication 1 ou 2,
**caractérisé en ce que**
les produits de départ sont mis en réaction dans une atmosphère gazeuse ayant une pression partielle de CO₂ de 0,08 MPa à 0,12 MPa.

4. Procédé conforme à l'une des revendications 1 à 3,
**caractérisé en ce que**
les produits de départ sont mis en réaction à des températures de 950°C à 1050°C.

5. Procédé conforme à l'une des revendications 1 à 4,
**caractérisé en ce que**
l'auxiliaire de minéralisation est ajouté en proportion de 1% en poids à 10% en poids par rapport à la somme des produits de départ.

6. Procédé conforme à la revendication 1 à 5,
**caractérisé en ce que**
l'on ajoute en tant qu'auxiliaire de minéralisation un carbonate alcalin ou alcalino-terreux, un hydrogénocarbonate, un fluorure ou un chlorure alcalin ou alcalino-terreux ou un mélange de ces composés.

7. Procédé conforme à la revendication 6,
**caractérisé en ce que**
l'on ajoute en tant qu'auxiliaire de minéralisation du carbonate de sodium Na₂CO₃, du fluorure de sodium NaF, du fluorure de potassium KF, du fluorure de calcium CaF₂, du chlorure de magnésium MgCl₂, ou un mélange de ces composés.

8. Procédé conforme à la revendication 7,
**caractérisé en ce que**
l'on ajoute en tant qu'auxiliaire de minéralisation un mélange de 0,5 % en poids à 5 % en poids de Na₂CO₃ et de 0,5 % en poids à 5 % en poids de CaF₂, en particulier un mélange de 1 % en poids à 1,5 % en poids de Na₂CO₃ et de 1 % en poids à 1,5 % en poids de CaF₂.

9. Procédé conforme à l'une des revendications 1 à 8,
**caractérisé en ce que**
l'auxiliaire de minéralisation est récupéré au moins partiellement à partir d'un produit de procédé industriel.

10. Procédé conforme à la revendication 9,
**caractérisé en ce que**
le produit de procédé industriel qui renferme les composés alcalins est mis en suspension dans de l'eau, de sorte que les composés alcalins qui y sont renfermés soient décomposés de façon à former des hydroxydes alcalins qui sont transformés par addition de CO₂ en un carbonate et/ou un hydrogénocarbonate et soient séparés de la suspension puis susceptible d'être utilisés en tant qu'auxiliaire de minéralisation.
